# EUROPEAN PATENT SPECIFICATION

(11) **EP 3 350 131 B1**
(45) Date of publication and mention of the grant of the patent: **25.08.2021**
(21) Application number: 16845778.6
(22) Date of filing: 01.09.2016
(51) Int. Cl.: C02F 1/465, C02F 1/461, C02F 103/10, C02F 103/28, C02F 1/56, C02F 1/463

(54) **A DEVICE FOR PURIFYING WATER AND ITS USE**
VORRICHTUNG ZUR REINIGUNG VON WASSER UND DEREN VERWENDUNG
DISPOSITIF DE PURIFICATION D'EAU ET SON UTILISATION

(30) Priority: 17.09.2015 FI 20150258
(43) Date of publication of application: 25.07.2018
(73) Proprietor: Elwater Ltd Oy, 33210 Tampere (FR)
(72) Inventor: KLEMOLA, Martti, 33720 Tampere (FI)
(74) Representative: Berggren Oy
(86) International application number: PCT/FI2016/050605
(87) International publication number: WO 2017/046444

(56) References cited:
- AU-B2- 765 688
- CN-B- 101 811 757
- CN-Y- 2 711 145
- GB-A- 1 415 000
- JP-A- 2005 177 681
- US-A- 3 964 991

## Description

### Field of the invention

The invention relates to water purification devices. The invention relates to water purification devices based on electroflotation. The invention relates to purifying waste water generated in small properties, mines, industrial plants or communities.

### Background

Purifying water is important from the point of view of human activities and environmental protection, firstly, for producing drinking water, and secondly, for controlling the environmental load. Purification of water, such as waste water, is necessary, for example, in industry, such as the paper, mining and chemical industries, and in communities (e.g. housing areas) or vessels (e.g. ships) for purifying used process waters, such as greywaters (various cleaning waters) or blackwaters (waste water from toilets).

One solution for purifying these types of water is based on electroflotation. In electroflotation, water purification is carried out by means of an electric current. An electric current is conducted to two electrodes: an anode, to which is conducted a voltage, and a cathode, to which is conducted a negative voltage with respect to the said anode. It may, therefore, be said that to the anode is conducted a positive voltage, although the absolute levels of the voltages with respect to, for example, the earth potential, are not significant as such. Water to be purified is provided between the said electrodes, whereupon the water to be purified acts as an electrolyte. As an anode is typically used a suitable soluble metal electrode.

Due to the said electric current, electrolytic reactions take place in the cell, as a result of which ions are dissolved from the anode into the electrolyte and hydrogen gas is reduced on the cathode. In accordance with Archimedes' principle, hydrogen gas naturally rises up in the cell and carries precipitated impurities to the surface. The impurities can thus be separated from the surface of the purified water in the upper part of the assembly of cells. Impurities precipitating on the surface are generally called flocks. A purifier based on electroflotation and the cell reactions taking place in it are disclosed in the patent FI115904B as well as in the document JP 2005 177681.

There are some problems in the prior art. For example, the anode in the apparatus (a wearing electrode) is arranged as the outer casing of the flow channel. Therefore, should the anode wear excessively, the entire flow channel will break, thus causing major maintenance needs for the entire apparatus. Furthermore, even if the anode does not wear out, replacing it may be difficult. As disclosed in the above-mentioned patent, anodes made of different materials typically purify different impurities from water. Because of this, in the prior art solution, different water purification devices are used in succession as a cascade arrangement. This type of arrangement including several water purification devices is space-consuming and may be difficult to control.

### Brief summary of the invention

The aim of the present invention is to provide a serviceable, compact and reliable device, the operation of which is in addition easy to control. This is achieved, and at least some of the problems relating to the prior art are avoided, by means of a solution in which the anode is arranged inside the cathode in such a way that the flow channel of the water to be purified remains between the said electrodes. Thus, even if the anode was to wear out completely, no uncontrolled leaks will appear in the apparatus. The anode is, in addition, supported with the type of support by means of which the anode can also be easily replaced. In one embodiment, the anode comprises at least two different materials. The invention is described in greater detail in independent claims 1 and 10. Preferred embodiments are described in the dependent claims.

### Brief description of the drawings

- Fig. 1: shows a side view of a water purification device,
- Fig. 2: shows a top view of a pair of electrodes and a power supply connected to it, the electrode pair comprising a cathode electrode as an outer electrode and an anode electrode as an inner electrode and innermost the anode electrode support,
- Fig. 3: shows a cross-sectional side view of a water purification device, that is, its outer casing and the electrode pair contained in it,
- Fig. 4: shows a top view of the electrode pair arrangement of a water purification device and apertures and meshes relating to it,
- Fig 5: shows a side view of the electrode pair arrangement shown in Fig. 4,
- Fig. 6: shows a side view of a water purification device,
- Fig. 7: shows the servicing of the water purification device of Fig. 6 and
- Fig. 8: shows the upper part of the outer casing of a water purification device and a discharge pipe arrangement relating to it for discharging purified water and flock material from the water purification device.

### Description of the embodiments

In this application, the term "generalized cylinder sleeve" refers to the surface formed by a line segment when it travels along a closed curve. A generalized cylinder sleeve preferably refers to the sleeve of a round-based generalized cylinder, that is, a cylinder sleeve. As an example of a generalized cylinder sleeve, which is at the same time a cylinder sleeve, is presented a longitudinal part of a cross-sectionally round pipe.

In the present application, symbols x, y and z refer to three different mutually perpendicular directions of which +z is directed essentially vertically upwards during the use of the water purification device. The essential character of verticality is discussed in greater detail below. A transverse direction refers to any direction perpendicular to the longitudinal direction. A longitudinal direction may refer to, for example, vertical direction z, in which case the transverse direction is any linear combination of directions x and y.

The device according to the invention is referred to as a water purification device 10 or a device 10 for purifying water. The device 10 for purifying water is a device which is suitable for purifying water. In addition to being suitable for purifying water, the water purification device 10 is also arranged to purify water.

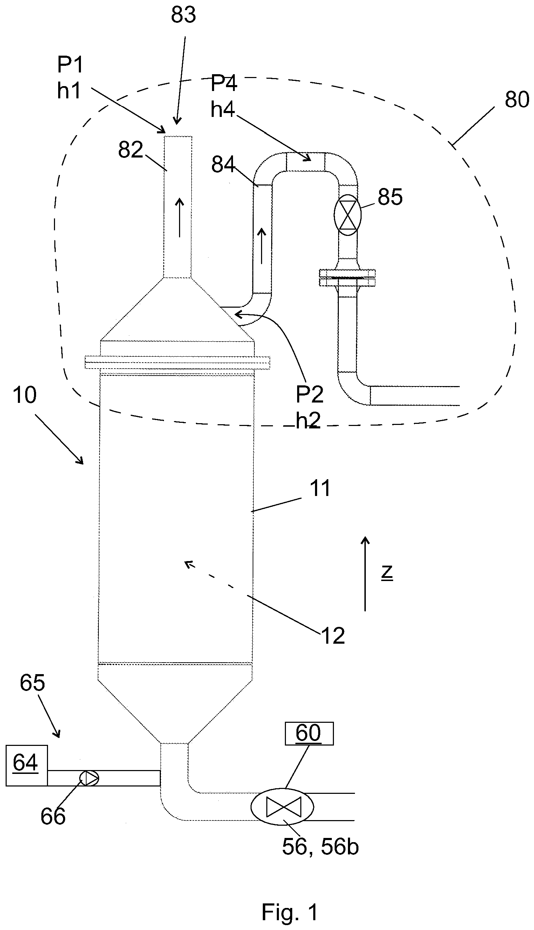

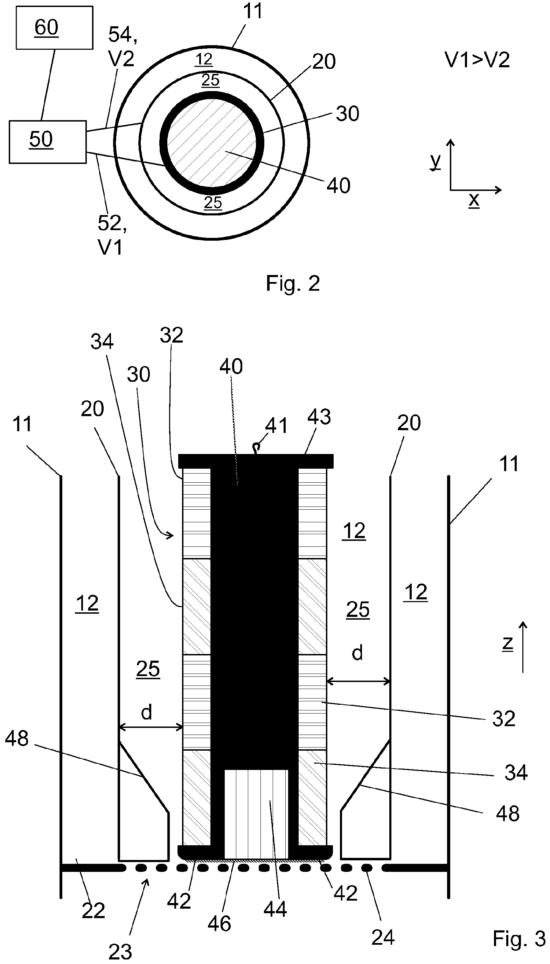

Figures 1 to 7 illustrate some embodiments of a water purification device 10. With reference to Figures 1 and 2, the water purification device 10 comprises an outer casing 11 which limits the inner part 12 of the water purification device. The material of the outer casing 11 is not of great importance. From the point of view of manufacturing technique and cost-efficiency, it may be advantageous to make the outer casing 11 of plastic. The outer casing 11 may alternatively be made of metal, for example, steel. The outer casing 11 can in that case be, for example, earthed to ensure electrical safety. An electrically insulating outer casing 11 material, such as plastic, also ensures electrical safety. The dimensions of the outer casing 11 may be selected according to use. The outer casing typically comprises a cylindrical part, the inner diameter of which is 20 cm - 80 cm, preferably 25 cm - 55 cm. The height of the cylindrical part may be, for example, 1.5 to 2.5 times greater, such as twice as great with respect to the said diameter. The shape of the outer casing is also not of any great importance to the functioning of the invention. It is possible to make the outer casing 11 of electroconductive material, such as metal, and to connect it to earth potential. The outer casing 11 may alternatively be made of electrically insulating material, such as plastic. Both methods ensure the electrical safety of the water purification device.

With reference to Figure 2, in the inner part 12 of the water purification device 10 is provided a cathode electrode 20 and an anode electrode 30. The cathode electrode 20 is a non-wearing electrode in electrolysis and the anode electrode 30 is a wearing electrode in electrolysis. Electrolysis is brought about by a power supply 50. The power supply 50 is arranged to produce a first voltage V1 and a second voltage V2, of which the first voltage is higher than the second (V1 >V2). It is possible for one of these voltages (V1, V2) to be the earth potential.

The said first voltage V1 is conducted by means of a first electric cable 52 to the anode electrode 30. The said second voltage V2 is conducted by means of a second electric cable 54 to the cathode electrode 20. Due to the difference in voltage, in the electrode pair (20, 30), especially in the gap 25 between them, start cell reactions known as such, as disclosed above in connection with the prior art. As a result of the reactions, impurities rise as flock material in the inner part 12 of the water purification device to its upper part, from which they can be discharged, for example, through the end of an aperture 83, such as a discharge pipe 82.

The cathode electrode 20 has the shape of a generalized cylinder sleeve, such as a cylinder. The outer surface of an object of this shape comprises at each point a vector +z directed in the same longitudinal direction +z of the cathode electrode 20. In this case, the cathode electrode has the shape of a continuous profile in its longitudinal direction +z, the cross-section of the profile on a plane perpendicular to the longitudinal direction forming a closed curve (that is, a closed path with no end), preferably a circle.

The said longitudinal direction +z is arranged to be essentially vertical during the use of the water purification device. This type of positioning facilitates controlling the flow of water in the water purification device 10 and collecting the flock material from the upper part of the water purification device. The longitudinal direction of the cathode electrode 20 is essentially vertical, when the said longitudinal direction +z forms an angle with the upwards directed vertical direction, the angle being no greater than 30 degrees (or such angle is not formed, that is, it is zero). The said angle is preferably smaller than 10 degrees or smaller than 5 degrees. The cathode electrode 20 is arranged inside the said outer casing 11. The cathode electrode preferably has the shape of a cylinder, that is, the sleeve of a round-based generalized cylinder. This facilitates the manufacture of the cathode electrode 20.

The cathode electrode 20 contains suitable electroconductive material. The electroconductive material refers to material with a maximum resistivity of 10⁻² Ωm at a temperature of 20 °C. The resistivity of the said material is preferably at most 10⁻⁵ Ωm in at least one direction at the said temperature; the direction may be significant since the material may be anisotropic. The cathode electrode 20 preferably contains at least one of the following: steel, acid-resistant steel, stainless steel and graphite. Most preferably, the cathode electrode contains steel, such as acid-resistant steel since the treatment of such material and joining it with other structures is easy to carry out, for example, by welding. Furthermore, steel is a relatively inexpensive material. The dimensioning of the cathode electrode 20 may be selected according to need. For example, the cathode electrode 20 can be made of pipe having a wall thickness of 0.5 mm - 5 mm, such as 1 mm - 3 mm, such as about 2 mm. The outer diameter of the said pipe may be, for example, 50 mm - 150 mm, such as 60 mm - 100 mm, such as about 75 mm. The length of the cathode electrode 20 may be selected according to need. Most preferably, the length is greater than the diameter. The length may be, for example, at least 30 cm - 5 m, 50 cm - 2 m or 75 cm - 1.5 m.

The water purification device 10 further comprises an anode electrode 30. The anode electrode 30 also has the shape of a generalized cylinder sleeve, preferably a cylinder. The anode electrode 30 remains inside the said cathode electrode 20 in a transverse direction perpendicular to the said longitudinal direction +z. The transverse direction refers to any direction perpendicular to the longitudinal direction +z. The longitudinal direction of the anode electrode is essentially the same as the longitudinal direction +z of the cathode electrode. This is the case when the cathode electrode 30 is not in contact with the anode electrode 20 even though it is inside it. Preferably, the cathode electrode 20 is cylindrical in shape, the anode electrode 30 is cylindrical in shape and has a smaller diameter, and the longitudinal directions and longitudinal central axes of the said cylinders are the same. The anode electrode 30 may be of essentially the same length as the cathode electrode 20 or shorter than the cathode electrode. Most preferably, the length of the anode electrode 30 is 75% - 110%, more preferably 85% - 100% of the length of the cathode electrode 20.

The anode electrode 30 contains electroconductive material. The anode electrode 30 preferably contains the type of electroconductive material which has a maximum resistivity of 10⁻² Ωm, preferably a maximum resistivity of 10⁻⁵ Ωm, at a temperature of 20 °C. The electroconductive material of the cathode electrode 20 is especially not in contact with the electroconductive material of the anode electrode 30. In the electrode pair 20, 30 formed by the anode electrode 30 and the cathode electrode 20, between the anode electrode 30 and the cathode electrode 20 remains a gap 25 in the said transverse direction. In the gap 25, the said water can firstly be purified by means of electrolysis, and secondly, the water can be conveyed in the said longitudinal direction +z upwards from below. Due to the gap 25, the electroconductive materials of the electrodes 20, 30 are not in galvanic contact with one another. A difference in electric potential may thus exist between them, by means of which the electrolysis purifying the water functions.

The anode electrode 30 preferably has the same cross-sectional shape as the cathode electrode 20, which is most preferably cylindrical. The outer diameter of the anode electrode 30 is selected to be suitable with respect to the inner diameter of the cathode electrode 20 and the width d of the gap 25 remaining between the electrodes, which is described in greater detail below. The anode electrode 30 wears down during use and may thus have some thickness in the transverse direction before use, for example, 5 mm-35 mm, more preferably 10 mm-25 mm, such as about 20 mm.

Since the anode electrode 30 must be replaced from time to time, it is preferable that the anode electrode 30 is easily replaceable. For this reason, the water purification device 10 comprises an anode electrode support 40 extending in the said longitudinal direction +z (see Fig. 3), at least a part of the anode electrode support 40 being provided inside the anode electrode 30 in the said transverse direction. The support preferably extends in the longitudinal direction +z over the entire anode electrode 30, inside the anode electrode 30, that is, in the said transverse direction inside the anode electrode 30. This gives the advantage that the anode electrode 30 can be lifted from the upper part of the support 40 even if the anode electrode 30 consists of separate parts. In the lower part of the anode electrode support 40 is provided a first projection 42, such as a first flange 42, bar 42, or cross formed by two crossing bars, protruding transversely from the body of the anode electrode support 40. The first projection 42 is arranged to support the anode electrode 30 from its lower part upwards in the said vertical direction +z. According to the Figure, the first flange 42 is arranged to support the anode electrode 30 from below, upwards in the said vertical direction +z. The anode electrode 30 can thus be replaced, for example, by lifting it up by using the anode electrode support 40 and replacing the anode electrode 30 or its parts. In one embodiment, the anode electrode support 40 comprises implements 41 for fixing a lifting device, such as a loop or a hook 41, from which the support 40 and anode electrode 30 can be lifted. As will be disclosed below, the anode electrode 30 preferably comprises at least two parts, in which case lifting the anode electrode 30 without the said support 40 would not necessarily be possible. Lifting from the upper part would only lift parts which are fixedly and firmly connected to the lifting point. The effect of the support 40 described is that an upwards +z directed force can easily be exerted on the anode electrode 30 from below in order to lift it.

In the upper part of the anode electrode support 40 is preferably provided a second projection 43, such as a second flange 43 or bar 43, protruding transversely from the body of the anode electrode support 40. The first projection 42 is arranged to support the anode electrode 30 from its lower part upwards in the said direction +z. According to the Figure, the second flange 43 is arranged to support the anode electrode 30 downwards from above in the said direction +z. The distance remaining between the first projection 42 and the second projection 43 in the longitudinal direction +z is preferably arranged to be adjustable. This gives the advantage that when the anode consists of several different materials, possibly of separate parts, the parts of the anode electrode 30 can be clamped together to sufficient tightness for conducting electricity between the said parts. The first 42 and/or second 43 projection may be made of electroconductive material, in which case the first electric cable 52 can be connected, for example, to either projection 42, 43 for conducting electricity to the anode material 32, 34. Optionally, either alternatively or in addition, the anode electrode support 40 can also be made of electroconductive material, in which case the first electric cable 52 can be connected, for example, to it 40. Optionally, either alternatively or in addition, also the implements 41 for fixing the lifting device may be made of electroconductive material, in which case the first electric cable 52 can be connected, for example, to it 41.

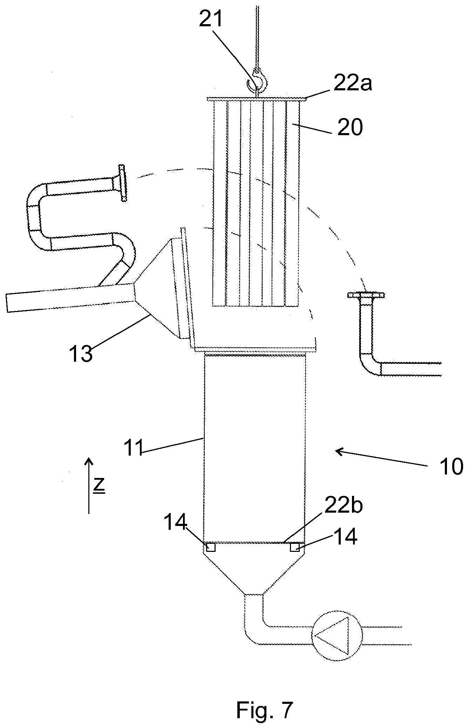

In a preferred embodiment, at least one of the projections 42, 43 is arranged to be attached to and detached from the body of the anode electrode support 40, for example, by means of threading. By means of form-locking, at least one of the projections 42, 43 is detachable for the duration of maintenance, such as replacing the anode material 32, 34, and attachable after maintenance. If threading is used as the form of locking, the vertical distance z between the projections 42, 43 can also be adjusted by means of threading. With reference to Figure 7, for example, the said first (lower) projection 42 can be arranged to be detachable. Figure 7 shows the removal of the electrode module from the water purification device, and the anode material can be replaceable, for example, through the base by removing the lower flange 42 for the duration of maintenance.

Since different anode materials remove different impurities from water, in prior art solutions must be used at least two different water purification devices in succession (i.e. in a cascade) which use different materials in the anode electrodes. This type of system is considerably large in size.

According to the invention, as shown in Figure 3, the anode electrode 30 comprises at least a first anode material 32 and a second anode material 34. The first anode material 32 and the second anode material 34 are different materials. In this case, one and the same anode electrode 30 can be used to purify various types of impurities. The anode electrode 30 may obviously also comprise a third anode material and optionally also other anode materials. Specifically, the anode electrode 30 comprises both a first anode material 32 and a second anode material 34 on its outer surface — on the outer surface which comprises the longitudinal vector (e.g. direction +z) of the anode electrode 30. Thus, both anode materials 32, 34 are in contact with the water passing into gap 25 and the electrolysis purifying the water takes place by the effect of both anode materials 32, 34.

As shown in the Figure, the anode electrode 30 comprises a first area or first areas which comprise a first anode material 32, and a second area or second areas which comprise a second anode material 34. Furthermore, the said first area is separate from the said second area, in other words, the areas do not comprise the same part of the outer surface of the anode electrode 30 directed towards the cathode electrode 20. The said first area or first areas may consist of the said first anode material 32. The said second area or second areas may consist of the said first anode material.

Suitable anode materials are, for example, multivalent metals, excluding mercury and other possible metals which are in liquid form in customary operating temperatures. By customary operating temperatures reference is made to temperatures ranging from +0 °C to +95°C; typically from +10 °C to +55°C.

As the first anode material can be used, for example, one of the following: aluminium (Al), iron (Fe), magnesium (Mg), carbon (C), chromium (Cr), copper (Cu), manganese (Mn), tin (Sn), lead (Pb) or bismuth (Bi). As a second anode material can be used - when one is used - another suitable material from this list. The first anode material preferably contains aluminium (Al) and the second anode material contains iron (Fe). As the first anode material is preferably used aluminium (Al) and as the second anode material iron (Fe).

The first 32 and second 34 anode materials are preferably provided on top of one another in the anode electrode 30, in the said longitudinal direction +z whereupon the water to be purified flows in the gap 25 past both the first 32 and the second 34 anode material.

Thus, during the purification process, the water to be purified is in contact with both the first 32 and the second 34 anode material. Spikes or the like may have been provided between the first 32 and second 34 anode material or conducting electricity between the different anode materials.

Preferably, the first anode material 32 is provided in the anode electrode 30 as one or more cylindrical rings, and the second anode material 34 is provided in the anode electrode 30 as one or more cylindrical rings. With reference to Figure 3, there may be, for example, two such rings of both materials. The said cylindrical rings are stacked on top of one another to form an anode electrode 30 in such a way that the first anode material 32 is tangential to the second anode material 34 in the longitudinal direction +z. Preferably, a ring made of the first anode material 32 remains between two rings made of the second anode material 34 in the longitudinal direction +z. The said rings may be equally high, or their heights may be varied in accordance with the water to be purified. Both (or all) anode materials 32, 34 do not necessarily wear down equally in the purification. The height of the rings may be greater in the lower part of the anode electrode, because the anode material typically wears down more at the bottom than at the top, because the water to be purified is led to the gap 25 from below.

The width d of the gap 25 has been adjusted according to the intended use. The width d of the gap may depend on the point of observation, for example, if the electrodes 20, 30 are not completely parallel and/or exactly identical in shape. By point of observation is here referred to (a) a point on the outer surface of anode electrode 30 directed towards the cathode electrode 20, or (b) a point on the inner surface of the cathode electrode 20 directed towards the anode electrode 30. This point of observation defines the gap 25. Observed from this point of observation, the width d of gap 25 refers either
- (a, when the point of observation is on the surface of the anode electrode 30) to the shortest transverse distance to the cathode electrode 20, that is, its inner surface, or
- (b, when the point of observation is on the surface of the cathode electrode 20) to the shortest transverse distance to the anode electrode 30, that is, its outer surface.
Typically, this shortest distance is directed from the said point of observation in the direction of the normal of the surface of the point of observation.

The suitable width d of the gap 25 is defined on the one hand by the composition of the impure water. The impure water is typically prefiltered at least with a screen or the like. Most typically, the screen size in this type of filtering is approximately 8 mm. With a slightly larger gap width d, operation is ensured also when the water to be purified contains impurities of this size. The water purification device 10 may comprise the said screen. Using a smaller screen size before purification based on electroflotation reduces the need for electrical purification. The screen size may preferably be smaller, such as 2 mm or 5 mm. Screens of various sizes may also be used in succession in such a way that the screen size diminishes in the direction of flow.

In some embodiments, the width d of the gap 25 in at least some of the above-mentioned points of observation is at least 2 mm, at least 5 mm, at least 8 mm or at least 10 mm. In some embodiments, the width d of the gap 25 in all of the above-mentioned points of observation is at least 2 mm, at least 5 mm, at least 8 mm or at least 10 mm. In some embodiments, the average width d of the gap 25 calculated over all points of observation is at least 2 mm, at least 5 mm, at least 8 mm or at least 10 mm. If the water purification device comprises a screen with a certain screen size, the width d of the gap 25 at all of the said points of observation may equal at least the said screen size. With these dimensions clogging of the gap 25 is avoided even if there are large impurity particles in the water being purified.

The suitable width of the gap 25 is on the other hand defined by the supply voltage. The gap 25 must be sufficiently narrow to enable the use of low supply voltages and to avoid using unnecessarily high electrical power. A low supply voltage is also advantageous from the point of view of operational safety.

In some embodiments, the width d of the gap 25 at all of the above-mentioned points of observation is at most 25 mm, at most 20 mm, or at most 15 mm. In some embodiments, the average width d of the gap 25, calculated over all of the above-mentioned points of observation, is at most 25 mm, at most 20 mm or at most 15 mm. Preferable widths of the gap 25 are such where the average width of the gap, calculated over all of the above-mentioned points of observation, is within the range 2 mm - 25 mm, such as 5 mm - 20 mm, more preferably 8 mm - 15 mm. Preferable widths are also such where the width d at all points of observation is within the range 2 mm - 25 mm, such as 5 mm - 20 mm, more preferably 8 mm - 15 mm.

The said power supply 50 is arranged to generate voltages V1 and V2, that is, the supply voltage V1-V2 of the electrode pair (20, 30). In one embodiment, the said power supply 50 is arranged to generate the said first voltage V1, which is at least 10 V higher than the said second voltage V2. In one embodiment, the said power supply 50 is arranged to generate the said first voltage V1, which is at most 200 V higher than the said second voltage V2. In one embodiment, the said power supply 50 is arranged to generate the said first voltage V1, which is 15 V - 100 V higher than the said second voltage V2. As the anode electrode 30 wears down, the width d of the gap 25 increases slightly. Because of this, it may be necessary to increase the voltage V1-V2 during use. In one embodiment, the power supply 50 is arranged to increase the voltage difference (V1-V2) between the electrodes during water purification. Increasing the voltage difference may be controlled, for example, by a control unit 60 (see Fig. 2).

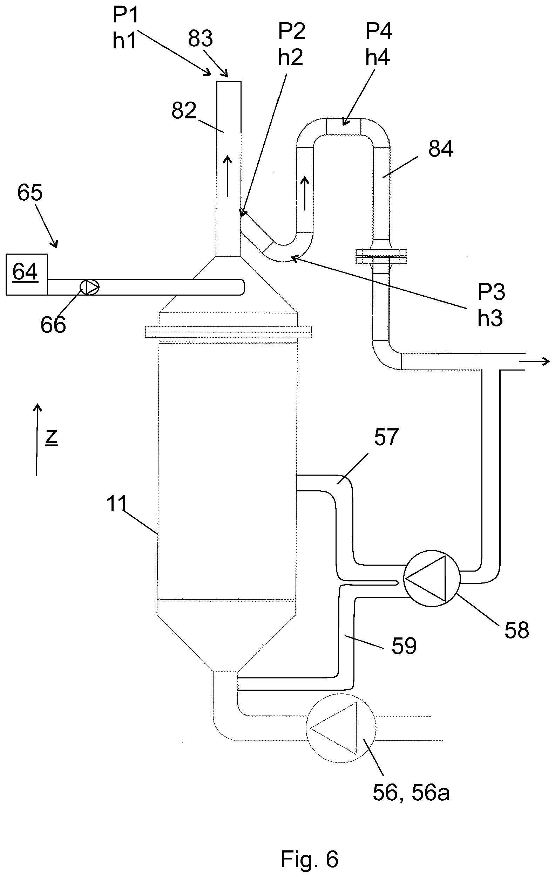

The magnitude of the voltage difference V1-V2 required may in addition depend on the purification requirement. The purification capacity is also affected by the magnitude of the electric current passing through the electrodes, which obviously depends on the voltage difference. The extent of the purification requirement depends, among other things, on the flow of the water to be purified (magnitude of flow, e.g. m³/h) through the device 10. For this reason, the water purification device 10 comprises equipment 56 (see Figs. 1 and 6), such as a pump 56a and/or a valve 56b, for regulating the flow (i.e. amount of flow) of the water being purified. A pump 56a may be used if the pressure of the water being purified is otherwise insufficient for effecting an appropriate flow. If, on the other hand, the pressure of the water to be purified is high, the flow may be restricted, for example, by means of a valve 56b). It is also possible to use a slightly oversized pump 56a and to restrict the flow by means of a valve 56b.

It has been noted that a typical electric power required for purification is approximately 1 kW, when the flow of water being purified is 1 m³/h. The requirement for electric power is scaled according to the water being purified. If the voltage difference V1-V2 is, for example, 10 V, obtaining a power of one kilowatt requires 100 A of power. Direct current may typically be used. These guidelines may be applied when selecting the power source. The supply voltage may also be varied according to need, also otherwise than by increasing the supply voltage V1-V2 as described above.

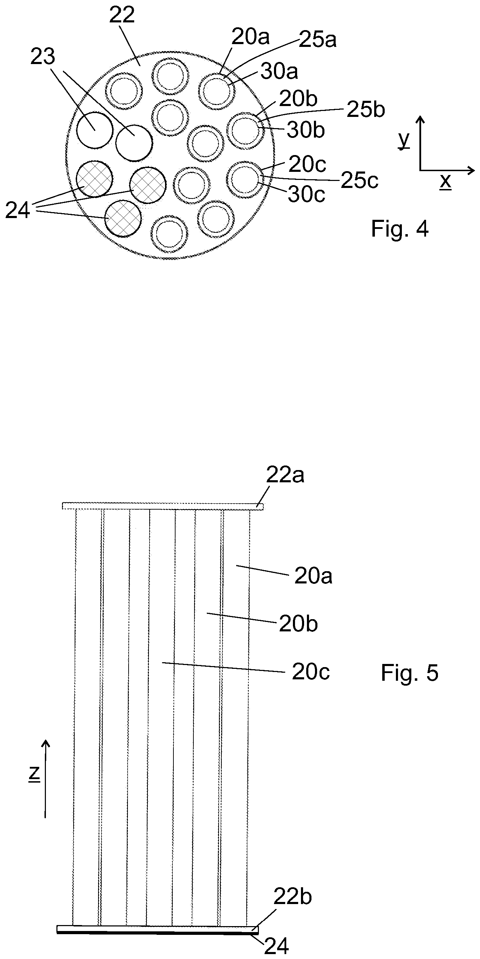

Since the electrolysis takes place specifically in the said gap 25, the water purification device preferably comprises equipment 22 for guiding the water to be purified (Figs. 4 and 5). With this equipment, the flow of water being purified or part thereof is restricted or prevented elsewhere than in the gap 25 between the pair of electrodes in the longitudinal direction +z. With reference to Figure 4, one embodiment the water purification device comprises several cathode electrodes 20a, 20b, 20c and several anode electrodes 30a, 30b, 30c remaining inside them, one inside each cathode electrode. Thus, between each pair of electrodes 20a, 30a; 20b, 30b; 20c, 30c remains a gap 25a, 25b, 25c in which the flow of water is allowed. With reference to Figure 4, the equipment 22 for restricting the flow of water 22 may comprise, for example, a disc 22 comprising holes 23 the size of the cathode electrode 20, and the cathode electrodes 20a, 20b, 20c may be fixed to the disc 22 in such a way that the water being purified can flow through the holes 23 in the disc 22 inside the cathode electrodes 20a, 20b, 20c. The cathode electrodes 20 may be, for example, welded to the disc 22. This type of disc 22 may be located in the lower part (Fig. 5, reference 22b) or upper part (Fig. 5, reference 22a) of the water purification device, or in both. In the holes 23 may also be provided a mesh 24 or the like for supporting the anode electrodes 30a, 30b, 30c. Water can flow through the apertures of this type of a mesh 24 into the gap 25, but the mesh itself supports the anode electrode support 40, such as its flange 42, from below. The disc 22 may be made of electroconductive material, in which case one of the electric cables 54 may be connected, for example, to it 22.

For the sake of clarity, in Figure 4, the electrodes extending from the apertures 23 in the longitudinal direction z have been omitted from five apertures in the drawing. Also for the sake of clarity, the mesh 24 has only been drawn in three of them. It is of course obvious that in the water purification device 10, water travels through each aperture 23 specifically into the gaps 25 between the pairs of electrodes 20, 30, and that the mesh 24 described can be used in each aperture. The size of the mesh 24 may be, for example, the size of the disc 22 and it may be provided immediately underneath the disc to support the anode electrodes 30 (see Fig. 5).

Alternatively, or in addition, in the upper part of the anode electrode support 40 may be provided bars or the like, by means of which the anode electrode support 40 is supported on the upper edge and/or upper disc 22a of the cathode electrode 20. The purified water is able to flow through the gap 25, past the said bars into the space above them, into the inner part 12 of the outer casing 11.

In order to prevent the flow of water inside the anode electrode 30, the anode electrode support 40 is closed in one embodiment. One embodiment comprises a plug 44 or the like by means of which the flow of water inside the anode electrode support 40 is prevented (see Fig. 3). The outer surface of the anode electrode support 40 is preferably fitted on the inner surface of the anode electrode 30, whereupon between the outer surface of the anode electrode support 40 and the inner surface of the anode electrode 30 in the transverse direction remains no space for the water to pass through, as shown in Fig. 2. Should such space remain, its width is at most 1/10 of the average width of the gap 25. Preferably, this type of support 40 is specifically provided inside the anode electrode 30 because the anode electrode 30 wears down during the purification. The supporting effect of the support 40 does not, therefore, diminish during use since the anode electrode 30 wears down from its outer surface.

In one embodiment, the cathode electrode 20 is watertight in the transverse direction. In this case, the flow of water from the gap 25 formed by the said cathode electrode 20 and anode electrode 30 in the said transverse direction is prevented. This has the advantage that the flow remains in the gap 25 in a controlled manner. Furthermore, if the flow outside the cathode 20 to other inner parts 12 of the water purification device 10 is prevented in the manner described above, the inner part 12 of the water purification device, excluding the electrodes, can be kept empty of water, which facilitates maintenance.

In one embodiment, transverse openings have, however, been provided in the cathode electrode 20 (or electrodes 20a, 20b, 20c) for cleaning the electrodes. Water can then be pumped from the inner part 12 of the water purification device into the gaps 25 through the said transverse openings of cathode electrodes. In Figure 6 this type of pump is illustrated by reference numeral 58. Purified water may be pumped through a pipe 57 into the inner parts 12 of the water purification device for the above-mentioned purpose. This water may be, for example, purified water, whereupon the electrodes can be cleaned by increasing the flow considerably. In this type of solution, the water purification device 10 comprises equipment, such as a pump 58, for conveying water from the said space 12 defined by the said outer casing 11, through the said openings into the gap 25 formed by the said cathode electrode 20 and anode electrode 30. In addition, the said equipment for conveying water, such as a pump, is arranged to prevent water from finding its way from the gap 25 formed by the said cathode electrode 20 and anode electrode 30, through the said openings, outside the said cathode electrode 20. The flow of water in the wrong direction can be prevented, for example, by means of a small pressure difference. Optionally, a purified water tank may also be used, by means of which the sufficiency of purified water for the above-mentioned cleaning purpose is ensured.

A pump 58 may alternatively be used for circulating purified water through the gaps 25. By using considerably greater flow than in normal water purification, the electrodes 20, 30 can thus be rinsed with purified water. This is illustrated in Figure 6, where purified water can be conveyed along a pipe 59 to the gaps 25 between the electrode pairs. Optionally, a purified water tank may in addition be used, by means of which the sufficiency of purified water for the above-mentioned cleaning purpose is ensured.

With reference to Figure 1, in one embodiment the water purification device 10 comprises equipment 65 for supplying an additive to the water being purified. The equipment may comprise, for example, a container 64 and a pump 66. An additive may be used for intensifying the purification of water, for example, for increasing its tendency to form flocks. Additives suitable for this purpose are, for example, certain polymers, such as polyacrylamide (PAM). As an additive can be used dry polyacrylamide. One such substance is known, for example, by the trademark Superfloc®. The charge of polyacrylamide may be cationic, anionic or neutral. The additive is preferably supplied in accordance with Figure 6 in the direction of flow of the water being purified, after the electrode pair 20, 30. The additive is preferably supplied in accordance with Figure 6 in height above the pair of electrodes 20, 30. The additive is preferably supplied as an aqueous solution. A suitable amount of additive, measured in additive dry matter, may be, for example, 50 g - 2000 g per every cubic metre of water to be purified, such as 75 g - 1000 g per every cubic metre of water to be purified, such as 100 g per every cubic metre of water to be purified. The additive may be supplied as an aqueous solution. For example, a tenfold amount of dry additive may be mixed in purified water compared to the above-mentioned and this aqueous solution may be mixed in a ratio of 1:9 in the water purification device. A cubic metre of purified water will then contain 900 litres of water that has passed through the pair of electrodes and 100 litres of additive solution pumped from the tank 64. With reference to Figure 6, in the tank 64 may be mixed, for example, polyacrylamide in a ratio of 100 g of dry polyacrylamide to a hundred litres of water. From the tank 64, this solution may be mixed in a ratio of 1:9 in the upper part of the water purification device 10, as shown in Figure 6. Alternative mixing ratios can be selected between 1:5 - 1:20 or 1:7 - 1:14, while the amount of additive remains within the above-mentioned limits.

With reference to Figures 1 and 2, the water purification device according to one embodiment comprises a control unit 60 which is arranged to control at least one, preferably both, of the following: (a) the said equipment 56 for adjusting the flow of the water to be purified, and (b) the power supply 50. The supply voltage V1-V2 can be controlled by controlling the power supply 50.

With reference to Figure 3, a water purification device 10 according to one embodiment comprises at least one anode electrode guide element 48. This type of guide element 48 is provided in the gap 25 between the pair of electrodes 20, 30 for controlling the anode electrode 30 in such a way that the width d of the gap 25 becomes suitable for the purpose. The guide element 48 tapers or thins upwards, whereupon when the anode electrode 30 is lowered into place, the guide element 48 guides the anode electrode 30 and/or anode electrode support 40 (e.g. its flange 42) into the correct position. The guide element 48 is made of electrically insulating material. The guide element 48 may be made of, for example, a material having a resistivity of at least 1 Ωm. The guide element 48 is narrow in a direction that is perpendicular to the longitudinal direction z of the cathode electrode 20 and the direction of the width d of the gap. Thus, the guide element does not significantly prevent the flow of the water being purified into gap 25.

Depending on the need of purification and scale, the water purification device 10 may comprise only one pair of electrodes 20, 30, as in Figures 1 to 3, or several pairs of electrodes 20a, 30 a; 20b, 30b; 20c, 30c, as in Figures 4 to 5. In other electrode pairs may obviously be applied the technical solutions described for one electrode pair, such as, for example, the anode electrode support 40 and/or an anode electrode made of several materials 32, 34. What has been said about the shape, location and position of the anode electrode 30 and cathode electrode 20 obviously also apply to the anode electrodes 20a, 20b, 20c and cathode electrodes 30a, 30b, 30c of other electrode pairs. In some preferred embodiments, the number of electrode pairs in the inner part 12 of one water purification device is one, two, three, four, five, six or seven. The electrode pairs may be arranged, as seen from above, for example in the vertices of a regular polygon, and optionally also in the midpoint. Several polygons inside each other may also be used to guide the positioning the electrodes, as shown in Figure 4, if appropriate.

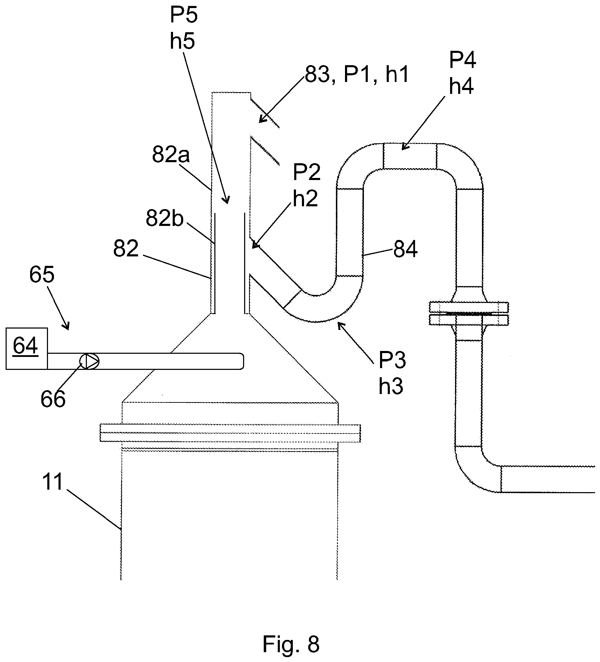

With reference to Figures 1 and 6, a water purification device 10 according to one embodiment comprises, in the upper part of the outer casing 11, a discharge pipe arrangement 80 for discharging purified water and flock material from the water purification device 10. The discharge pipe arrangement 80 comprises an opening 83 for discharging flock material. In one embodiment, the opening 83 is provided in the flock material discharge pipe 82. The flock material discharge pipe 82 continues from the upper part of the outer casing 11 up to the opening 83. The opening 83 is at a first height h1 and at a first point P1. The discharge pipe arrangement 80 further comprises a discharge pipe 84 for purified water. The discharge pipe 84 for purified water is connected at its end to the outer casing 11 (Figure 1) or to the said flock material discharge pipe 82 (Figure 6) at a second point P2. This second point P2 is at a second height h2 which is lower than the first height h1 (h1<h2). By this positioning is achieved the advantage that the floating flock material can be separated from the heavier purified water in the area between height levels h1 and h2 by means of gravity. Most preferably, the difference in height levels h2-h1 is within the range 20 cm - 100 cm, such as 30 cm - 80 cm, most preferably 40 cm - 60 cm. In one embodiment, the flock material discharge pipe 82 or its outer pipe 82a (Figure 8) is made of transparent material. The user can then monitor the purification process.

Flock material may be discharged from the opening 83 at least when the flow of purified water in the pipe 84 is appropriately limited. Such limiting can be implemented, for example, by means of a valve. However, the flow can preferably be limited by utilising the hydrostatic pressure of the purified water.

Furthermore, in order to naturally discharge the flock material from the purified water discharge pipe 84, insofar as it even enters it, it is preferable for the purified water discharge pipe to run descendingly over some distance from the said second point P2.

For this latter reason, in one embodiment (see Fig. 6), the purified water discharge pipe 84 continues from the second point P2 to a third point P3 which follows the said second point P2 in the direction of flow of the purified water and is at a third height h3. The said third height h3 is lower than the second height h2 (h3 < h2). This difference in height h2-h3 may be, for example, 10 cm - 100 cm, such as 15 cm - 50 cm.

For the said earlier reason, in one embodiment the purified water discharge pipe 84 continues from the second point P2 to a fourth point P4, for example, via the said third point (see Figs. 1 and 6). The said fourth point follows the said second point P2 in the direction of flow of the purified water, preferably also after the third point, and is at a fourth height h4. The said fourth height h4 is higher than the said second height h2 (h4 > h2) and lower than the said first height (h4 < h1). The height difference h4-h2 may be, for example, 10 cm - 50 cm, such as 15 cm - 40 cm. The height difference h1-h4 may be, for example, 5 cm - 20 cm, such as 7 cm - 15 cm. With such mutual positioning of the opening 83 and the pipe 84 is achieved the advantage that there is a slight overpressure in the purified water discharge pipe 84 at the point where the purified water discharge pipe 84 is connected by its end to the outer casing 11 or to the flock material discharge pipe 82. This intensifies the separation of purified water and flock material based on gravity.

However, at the said second point P2 of the purified water discharge pipe 84 the pressure is preferably not too high. This can be achieved by means of at least two technical solutions:
(1) the said purified water discharge pipe 84 does not extend to a point which is higher than the said first height h1. Should this be the case, the pressure caused by the flock material would not suffice to lift the purified water to a high enough level, but instead both purified water and flock material would be discharged from the opening 83. OR
(2) the said purified water discharge pipe 84 extends to a point which is on a higher level than the said first height h1 and the water purification device 10 comprises a pump at such point in the purified water discharge pipe 84 which is, in the direction of flow of the purified water, before the first such point where the height exceeds height level h1 of the opening 83. The direction of flow of the purified water is illustrated in Figures 1 and 6 by an arrow.

Alternatively can be applied a solution, where the opening 83 is at the said first height h1 and the purified water discharge pipe 84 is connected to the outer casing 11 or flock material discharge pipe 82 at a second height h2, which is lower than the first height (h1 < h2), and in the purified water discharge pipe 84 is provided a flow throttle. As a throttle may possibly be used the stop valve 85 described below, if the valve 85 is closed only partly.

With reference to Figure 8, in one embodiment the flock material discharge pipe comprises an outer pipe 82a and an inner pipe 82b arranged inside it. The inner pipe 82b is arranged to convey the purified water and flock material from the upper part of the water purification device to a fifth height h5 located at a fifth point P5. The said fifth height is higher than the said second height h2, for example, at least 10 cm or at least 20 cm higher. At the said second height h2, the purified water discharge pipe 84 is connected to the said outer pipe 82a. The said outer pipe 82a extends higher from the said second height, up to the flock material discharge opening 83. The said outer pipe 82a extends downwards from the said second height, down to at least the lower edge of the purified water discharge pipe 84, optionally also to the outer casing 11 of the water purification device 10. The outer pipe 82a is closed at its lower end, whereas the inner pipe 82b is open at its lower end. By this arrangement is achieved the advantage that the direction of flow of the purified water discharging from the inner pipe 82b takes a sharp turn at the upper end of the inner pipe, which facilitates the separation of the flock material from the purified water.

In one embodiment, the water purification device 10 comprises an opening 83 in the upper part of the outer casing 11 for discharging flock material, and a purified water discharge pipe 84. The water purification device further comprises a stop valve 85 which is arranged to close the purified water discharge pipe 84. In this case, the flock material can be discharged from below the said opening 83, for example, from the flock material discharge pipe 82, by closing the said stop valve 85 and continuing the purification of the water for a while. In this case, an interruption of use can be provided for and it can be ensured that even if the water is not purified, the surface of the flock material will not fall to a level from which it could proceed into the purified water discharge pipe 84.

It has been noted that the separation of the flock material from the purified water takes some time. Due to this, the flow of water and/or the inner diameter of the water purification device and/or the inner diameter of the flock material discharge pipe is dimensioned in such a way that the flow of purified water from the upper edge of the electrode pair 20, 30 to the opening 83 will take at least 5 seconds, such as 5 s - 200 s, more preferably 6 s - 30 s, such as 8 s - 15 s, such as approximately 10 s.

It is clear that the discharge pipe arrangement 80 can be used in a water purification device 10 based on electroflotation, completely irrespective of the type of electrode solution used in the water purification device.

It has been noted that the electrodes 20, 30 may become soiled during use. Because of this, some embodiments comprise equipment for cleaning the anode electrode 30 and/or the cathode electrode 20. This type of purifier may function in several different ways. For example, above have been described two ways of using purified water for this purpose. This type of solution comprises a pump 58 (Fig. 6) for conveying purified water into the said gap 25, for example, from the lower part of the gap 25 or through transverse openings provided in the cathode electrode 20, and the required pipes 57 and/or 59.

Alternatively, or in addition, the water purification device 10 may comprise means for vibrating the anode electrode 30 and/or the cathode electrode 20, for example in the vertical direction. This equipment may comprise, for example, an eccentric and a motor or an electromagnet by means of which the vibration can be carried out. By means of an electromagnet can be generated a variable magnetic field by conducting a suitable alternating current to it from a suitable power supply. Vibration can also be brought about by means of a permanent magnet if the permanent magnet is vibrated, for example in the manner described above.

Furthermore or alternatively, the water purification device may comprise a brush for cleaning the gap 25 and suitable means for moving the brush. Ultrasound can also be used in a manner known as such for cleaning the electrodes. To an electrode 20, 30 or electrodes may, for example, be connected an ultrasonic actuator for cleaning the electrodes. The ultrasonic actuator is controlled by a power supply.

Even if the electrodes 20, 30 could be cleaned during use, for example, with the equipment described above, at least the anode electrodes must be replaceable due to wear. In the foregoing is described how the anode electrodes are easily replaceable by means of the anode electrode support 40. With reference to Figure 7, in one embodiment the water purification device 10 can be opened. The outer casing 11 of the water purification device comprises a cover part 13 which is arranged to be in the open and closed positions. In one embodiment, in the open position all anode electrodes 30 can be lifted vertically upwards from inside the cathode electrodes 20 and outside the outer casing 11. It may thus be possible to lift the anode electrodes 30 one or several, such as all, at a time.

In Figure 7, the cover 13 is hinged to the rest of the outer casing 11, whereupon, according to the Figure, it can be turned and the swivelling axis is essentially horizontal and outside the inner part 12. Alternatively, the cover 13 may be arranged to turn with respect to the vertical axis, whereby the swivelling axis remains outside the inner part 12. This ensures sufficient opening of the cover part 13 for the purpose of replacing the electrodes 20, 30 of the water purification device. The water purification device may comprise equipment, such as a latch or the like, for locking the cover part in the closed position. The said means are also arranged to be openable for opening the cover part 13.

In the embodiment of Figure 7, the disc 22 is provided a loop 21 for lifting the disc 22. Since cathode electrode pipes 20 are welded to the disc 22, all of the electrode pairs of the water purification device 10 thus form an electrode module which can be removed as an entity. It may be that it is easier to mount new anode electrodes 30 in place outside the water purification device 10. It may, in addition, occasionally also be necessary to replace and/or thoroughly clean the cathode electrodes 20. It is thus advantageous that also the cathode electrodes 20 are easy to remove from the water purification device 10. In one embodiment the outer casing 11 comprises, in its lower part, inwards extending projections 14 onto which the electrode module described above can be lowered after maintenance procedures have been completed. In addition or alternatively, the water purification device may comprise the above-mentioned disc 22b, onto which the electrode module can be lowered. Disc 22b may also be a fixed part of the electrode module, in which case the disc 22b (cf. Fig. 5) of the electrode module may be lowered onto the supports 14 (cf. Fig. 7).

It is possible to use, for example, an electrode solution where the anode electrode 30 comprises a first 32 and a second 34 anode material, but no anode support is provided inside the anode electrode in the transverse direction. For example, the electrode module may comprise flow-limiting elements 22a and 22b in such a way that when the electrode module is removed, both the cathode electrodes 20 and anode electrodes 30 are removed from the device 10. Thus, for example, if the lower element 22b can be removed from the electrode module, the cathode electrode 20 can be lifted in such a way that the anode material still remaining on the anode electrodes 30 remains on top of the lower disc 22b, for example on its mesh 24. The electrode module can be assembled in an obvious manner, whereupon the anode electrode 30 can be assembled, for example by placing closed cylinders on top of one another. If necessary, controls 48 can be used for forming the gaps 25 and guiding the said cylinders to the correct position. According to Figure 3, the flange 42, for example its lower part, can be shaped to fit the controls 48. For example, the lower edge of the flange 42 can be rounded or bevelled.

The embodiment of the water purification device 10 according to Figure 7 further comprises openable locking elements for locking the cover part 13 in the closed position.

With reference to Figure 3, in one embodiment the water purification device comprises equipment 46, such as a balance 46 or a pressure sensor 46 for measuring and giving the amount of the anode electrode 30 material. The balance or pressure sensor 46 may be arranged, for example under the anode electrode support 40, as in Figure 3. Alternatively, the pressure sensor 46 may be provided, for example, in the upper part of the anode electrode support 40, where the said support 40 may rest on the cathode electrode 20, for example, through an electrical insulation. Alternatively, the pressure sensor 46 may be provided, for example, between the anode electrode 30 and an anode electrode support 40. With this equipment 46 is obtained the advantage that the wearing of the anode electrode 30 can be measured during use.

The water purification device 10 then preferably comprises a control unit, such as a control unit 60 which is arranged to receive from the said equipment 46 information, which indicates the amount of anode electrode material 30, for measuring the amount of anode electrode material. The control unit 60 is, in addition, arranged to transmit an alarm signal, for example, optically or acoustically, when the amount of anode electrode material 30 falls below a certain limit value. The operator of the device thus receives information on the need to replace the anode electrode 30.

As disclosed above, the water purification device 10 may be used, for example, in the mining industry, the paper industry or for purifying municipal waste water. The water purification device 10 is particularly well suited for purifying municipal waste water. One arrangement comprises a residential building and a water purification device 10 according to one of the embodiments disclosed.

As disclosed above, for example a water purification device having an anode electrode 30 consisting of two different materials can be implemented so as to be sufficiently small for single-family houses. One such arrangement comprises (i) one or more buildings with a joint average daily waste water production of at most 10 m³on a monthly level and (ii) a water purification device 10 which comprises (ii,a) only one cathode electrode and/or (ii,b) an anode electrode 30 consisting of two different anode materials.

As disclosed above, the water purification device 10 can preferably be used for purifying the waste water produced in a residential building. The water purification device described above can be implemented as a small and low-cost solution, for example, for sparsely populated areas. The water purification device 10 is preferably used for purifying the waste water produced by only one property. By a property is referred to a set of one or more buildings administered by the same owner and located in a restricted and undivided area.

## Claims

1. A device (10) for purifying water, the device (10) comprising
- an outer casing (11) which limits an inner part (12) of the device (10),
- a cathode electrode (20) having the shape of a generalized cylinder sleeve, the cathode electrode thus having a profile shape extending in a longitudinal direction (+z) of the cathode electrode (20), the cross-section of the profile shape forming a closed curve, the said longitudinal direction (+z) being arranged to be essentially vertical during the use of the device (10), which
- cathode electrode (20) is arranged in the inner part (12) of the device (10), the device (10) further comprising
- an anode electrode (30) having the shape of a generalized cylinder sleeve in such a way that
- between the anode electrode (30) and cathode electrode (20) remains, in a transverse direction that is perpendicular to the said longitudinal direction (+z), a gap (25) for conveying the said water,
- the said anode electrode (30) comprising on its outer surface at least a first anode material (32).
**characterised in that**
- the anode electrode (30) in addition comprises on its outer surface at least a second anode material (34), which second anode material (34) is a different material than the said first anode material (32) and the anode electrode (30) comprises a first area or first areas which comprise the first anode material (32), and a second area or second areas which comprise the second anode material (34), the said first area or first areas not comprising the same part of the outer surface of the anode electrode (30) directed towards the cathode electrode (20) as the said second area or second areas, and
- the anode electrode (30) remains inside the said cathode electrode (20) in the said transverse direction, and the device (10) further comprises
- an anode electrode support (40) extending in the said longitudinal direction (+z), at least a part of the anode electrode support (40) being provided inside the said anode electrode (30) in the said transverse direction, which
- anode electrode support (40) comprises in its lower part, protruding transversely from its body, a first projection (42) arranged to support the anode electrode (30) from its lower part upwards in the said longitudinal direction (z), whereupon
- the anode electrode (30) can be lifted by means of the said anode electrode support (40) out of the cathode electrode (20) and is thus replaceable.

2. The device (10) according to claim 1, wherein
- the anode electrode support (40) comprises in its upper part, protruding transversely from its body, a second projection (43) which is arranged to support the anode electrode (30) from its upper part downwards in the longitudinal direction (z), whereupon
- the anode material is supportable in the longitudinal direction (z) between the first projection (42) and the second projection.

3. The device (10) according to claim 1 or 2, comprising
- form-locking, by means of which the said first projection (42) is arranged to be detachable from the anode electrode support (40), and/or
- form-locking by means of which the said second projection (43) is arranged to be detachable from the anode electrode support (40).

4. A device (10) as claimed in any of the claims 1 to 3, comprising
- means (22) for guiding the water to be purified,
- the said means (22) for guiding the water to be purified being arranged to restrict the flow of the water to be purified in the said longitudinal direction (+z) outside the gap (25) formed by the electrode pair (30, 20) comprised of the said cathode electrode (20) and anode electrode (30), and optionally also outside a gap formed by another electrode pair (20b, 30b) formed by another cathode electrode (20b) and another anode electrode (30b).

5. The device (10) according to any of the claims 1 to 4, wherein
- the said anode electrode support (40) is closed or comprises a plug (44) or the like by means of which the flow of water inside the anode electrode support (40) is prevented.

6. The device (10) according to any of the claims 1 to 5, comprising
- at the upper end of the outer casing (11), a discharge pipe arrangement (80) for discharging purified water and flock material separately from the device (10), the discharge pipe arrangement (80) comprising
- an opening (83) for discharging flock material, the said opening (83) being at a first height (h1), and
- a purified water discharge pipe (84) connected by its end to the said outer casing (11) or to a flock material discharge pipe at a second height (h2), the second height being lower than the first height (h2 < h1), and which
- purified water discharge pipe (84) continues to a point (P4) which is, in the direction of flow of the purified water, after the end of the said purified water discharge pipe (84) and at a fourth height (h4) which is higher than the said second height (h4 > h2) and lower than the said first height (h4 < h1).

7. The device (10) according to the claim 6, wherein
- the purified water discharge pipe (84) of the discharge pipe system (80) continues from the point where the purified water discharge pipe (84) is connected by its end to the said outer casing (11) or to a flock material discharge pipe (82), in the direction of flow of the purified water to a point which is
• at a third height (h3) and
• before the said point in the direction of flow of the purified water, which is at the said fourth height (h4) in such a way that
- the third height (h3) is lower than the said second height (h2) (h3 < h2).

8. Use of the device (10) according to any of the claims 1 to 7 in such a way that
- an additive facilitating the formation of flocks is supplied into the water to be purified or the purified water.

9. Use of the device (10) according to any of the claims 1 to 7 for purifying waste water produced in a residential building.

## Patentansprüche

1. Vorrichtung (10) zur Reinigung von Wasser, wobei die Vorrichtung (10) umfasst
- ein Außengehäuse (11), das einen inneren Teil (12) der Vorrichtung (10) begrenzt,
- eine Kathodenelektrode (20), die eine Gestalt einer verallgemeinerten Zylinderhülse aufweist, wodurch die Kathodenelektrode eine Profilgestalt aufweist, die sich in einer Längsrichtung (+z) der Kathodenelektrode (20) erstreckt, wobei der Querschnitt der Profilgestalt eine geschlossene Kurve bildet, wobei die Längsrichtung (+z) angeordnet ist, um bei der Verwendung der Vorrichtung (10) im Wesentlichen vertikal zu sein, wobei die
- Kathodenelektrode (20) in dem inneren Teil (12) der Vorrichtung (10) angeordnet ist, wobei die Vorrichtung (10) weiter umfasst
- eine Anodenelektrode (30), die die Gestalt einer verallgemeinerten Zylinderhülse auf eine solche Weise aufweist, dass
- zwischen der Anodenelektrode (30) und Kathodenelektrode (20) in einer Querrichtung, die senkrecht zu der Längsrichtung (+z) verläuft, ein Spalt (25) zum Fördern des Wassers verbleibt,
- die Anodenelektrode (30) an ihrer Außenoberfläche umfasst mindestens ein erstes Anodenmaterial (32),
**dadurch gekennzeichnet, dass**
- die Anodenelektrode (30) an ihrer Außenoberfläche zusätzlich mindestens ein zweites Anodenmaterial (34) umfasst, wobei das zweite Anodenmaterial (34) ein anderes Material als das erste Anodenmaterial (32) ist, und die Anodenelektrode (30) einen ersten Bereich oder erste Bereiche umfasst, die das erste Anodenmaterial (32) umfassen, und einen zweiten Bereich oder zweite Bereiche, die das zweite Anodenmaterial (34) umfassen, wobei der erste Bereich oder erste Bereiche nicht denselben Teil der Außenoberfläche der Anodenelektrode (30) umfassen, die zu der Kathodenelektrode (20) gerichtet ist, wie der zweite Bereich oder zweite Bereiche, und
- die Anodenelektrode (30) innerhalb der Kathodenelektrode (20) in der Querrichtung verbleibt, und die Vorrichtung (10) weiter umfasst
- eine Anodenelektrodenstütze (40), die sich in der Längsrichtung (+z) erstreckt, wobei mindestens ein Teil der Anodenelektrodenstütze (40) innerhalb der Anodenelektrode (30) in der Querrichtung bereitgestellt ist, wobei die
- Anodenelektrodenstütze (40) in ihrem unteren Teil, quer aus ihrem Körper hervorstehend, einen ersten Vorsprung (42) umfasst, der angeordnet ist, um die Anodenelektrode (30) von ihrem unteren Teil aufwärts in der Längsrichtung (z) zu stützen, woraufhin
- die Anodenelektrode (30) anhand der Anodenelektrodenstütze (40) aus der Kathodenelektrode (20) gehoben werden kann, und somit austauschbar ist.

2. Vorrichtung (10) nach Anspruch 1, wobei
- die Anodenelektrodenstütze (40) in ihrem oberen Teil, quer aus ihrem Körper hervorstehend, einen zweiten Vorsprung (43) umfasst, der angeordnet ist, um die Anodenelektrode (30) von ihrem oberen Teil abwärts in der Längsrichtung (z) zu stützen, woraufhin
- das Anodenmaterial in der Längsrichtung (z) zwischen dem ersten Vorsprung (42) und dem zweiten Vorsprung stützbar ist.

3. Vorrichtung (10) nach Anspruch 1 oder 2, umfassend
- Formschluss, anhand dessen der erste Vorsprung (42) angeordnet ist, um von der Anodenelektrodenstütze (40) lösbar zu sein, und/oder
- Formschluss, anhand dessen der zweite Vorsprung (43) angeordnet ist, um von der Anodenelektrodenstütze (40) lösbar zu sein.

4. Vorrichtung (10) nach einem der Ansprüche 1 bis 3, umfassend
- Mittel (22) zum Leiten des zu reinigenden Wassers,
- wobei die Mittel (22) zum Leiten des zu reinigenden Wassers angeordnet sind, um den Fluss des zu reinigenden Wasser in der Längsrichtung (+z) außerhalb des Spalts (25), der durch das Elektrodenpaar (30, 20) gebildet wird, das aus der Kathodenelektrode (20) und der Anodenelektrode (30) besteht, einzuschränken, und optional auch außerhalb eines Spalts, der durch ein anderes Elektrodenpaar (20b, 30b) gebildet wird, das durch eine weitere Kathodenelektrode (20b) und eine weitere Anodenelektrode (30b) gebildet wird.

5. Vorrichtung (10) nach einem der Ansprüche 1 bis 4, wobei
- die Anodenelektrodenstütze (40) geschlossen ist oder einen Stopfen (44) oder dergleichen umfasst, anhand dessen der Wasserfluss innerhalb der Anodenelektrodenstütze (40) verhindert wird.

6. Vorrichtung (10) nach einem der Ansprüche 1 bis 5, umfassend
- am oberen Ende des Außengehäuses (11) eine Auslassrohrbaugruppe (80) zum Auslassen von gereinigtem Wasser und Flockmaterial getrennt aus der Vorrichtung (10), wobei die Auslassrohrbaugruppe (80) umfasst
- eine Öffnung (83) zum Auslassen von Flockmaterial, wobei die Öffnung (83) auf einer ersten Höhe (h1) liegt, und
- ein Auslassrohr für gereinigtes Wasser (84), das mit seinen beiden Enden mit dem Außengehäuse (11) oder mit einem Auslassrohr für Flockmaterial auf einer zweiten Höhe (h2) verbunden ist, wobei die zweite Höhe niedriger als die erste Höhe (h2 < h1) ist, und wobei das
- Auslassrohr für gereinigtes Wasser (84) zu einem Punkt (P4) führt, der in der Flussrichtung des gereinigten Wassers, nach dem Ende des Auslassrohres für gereinigtes Wasser (84), und auf einer vierten Höhe (h4) liegt, die höher als die zweite Höhe (h4 > h2), und niedriger als die erste Höhe (h4 < h1) ist.

7. Vorrichtung (10) nach Anspruch 6, wobei
- das Auslassrohr für gereinigtes Wasser (84) des Auslassrohrsystems (80) von dem Punkt, an dem das Auslassrohr für gereinigtes Wasser (84) durch sein Ende mit dem Außengehäuse (11) oder mit einem Auslassrohr für Flockmaterial (82) verbunden ist, in der Flussrichtung des gereinigten Wassers zu einem Punkt weiterführt, welcher wie folgt ist
• auf einer dritten Höhe (h3) und
• vor dem Punkt in der Flussrichtung des gereinigten Wassers, der auf der vierten Höhe (h4) liegt, derart, dass
- die dritte Höhe (h3) niedriger als die zweite Höhe (h2) (h3 < h2) ist.

8. Verwendung der Vorrichtung (10) nach einem der Ansprüche 1 bis 7, derart, dass
- ein Additiv, das die Bildung von Flocken erleichtert, in das zu reinigende oder gereinigte Wasser beigegeben wird.

9. Verwendung der Vorrichtung (10) nach einem der Ansprüche 1 bis 7 zum Reinigen von Schmutzwasser, das in einem Wohngebäude erzeugt wird.

## Revendications

1. Dispositif (10) de purification d'eau, le dispositif (10) comprenant
- un boîtier externe (11) qui limite une partie interne (12) du dispositif (10),
- une électrode de cathode (20) ayant la forme d'un manchon de cylindre généralisé, l'électrode de cathode ayant ainsi une forme de profil s'étendant dans une direction longitudinale (+z) de l'électrode de cathode (20), la section transversale de la forme de profil formant une courbe fermée, ladite direction longitudinale (+z) étant agencée de façon à être pratiquement verticale pendant l'utilisation du dispositif (10), dans lequel
- l'électrode de cathode (20) est agencée dans la partie interne (12) du dispositif (10), le dispositif (10) comprenant en outre
- une électrode d'anode (30) ayant la forme d'un manchon de cylindre généralisé de telle manière que
- entre l'électrode d'anode (30) et l'électrode de cathode (20) est situé, dans une direction transversale qui est perpendiculaire à ladite direction longitudinale (+z), un espacement (25) pour transporter ladite eau,
- ladite électrode d'anode (30) comprenant sur sa surface externe au moins un premier matériau d'anode (32),
**caractérisé en ce que**
- l'électrode d'anode (30) comprend en outre sur sa surface externe au moins un deuxième matériau d'anode (34), ledit deuxième matériau d'anode (34) étant un matériau différent dudit premier matériau d'anode (32) et l'électrode d'anode (30) comprend une première zone ou des premières zones qui comprennent le premier matériau d'anode (32), et une deuxième zone ou des deuxième zones qui comprennent le deuxième matériau d'anode (34), ladite première zone ou lesdites premières zones ne comprenant pas la même partie de la surface externe de l'électrode d'anode (30) dirigée vers l'électrode de cathode (20) que ladite deuxième zone ou lesdites deuxièmes zones, et
- l'électrode d'anode (30) reste à l'intérieur de ladite électrode de cathode (20) dans ladite direction transversale, et le dispositif (10) comprend en outre
- un support d'électrode d'anode (40) s'étendant dans ladite direction longitudinale (+z), au moins une partie du support d'électrode d'anode (40) étant disposée à l'intérieur de ladite électrode d'anode (30) dans ladite direction transversale, dans lequel
- le support d'électrode d'anode (40) comprend dans sa partie inférieure, faisant saillie transversalement depuis son corps, une première saillie (42) agencée pour soutenir l'électrode d'anode (30) depuis sa partie inférieure vers le haut dans ladite direction longitudinale (z), de sorte que
- l'électrode d'anode (30) peut être levée au moyen dudit support d'électrode d'anode (40) hors de l'électrode de cathode (20) et est donc remplaçable.

2. Dispositif (10) selon la revendication 1, dans lequel
- le support d'électrode d'anode (40) comprend dans sa partie supérieure, faisant saillie transversalement depuis son corps, une deuxième saillie (43) qui est agencée pour soutenir l'électrode d'anode (30) depuis sa partie supérieure vers le bas dans la direction longitudinale (z), de sorte que
- le matériau d'anode peut être soutenu dans la direction longitudinale (z) entre la première saillie (42) et la deuxième saillie.

3. Dispositif (10) selon la revendication 1 ou 2, comprenant
- un verrouillage de forme, au moyen duquel ladite première saillie (42) est agencée de façon à être détachable du support d'électrode d'anode (40), et/ou
- un verrouillage de forme, au moyen duquel ladite deuxième projection (43) est agencée de façon à être détachable du support d'électrode d'anode (40).

4. Dispositif (10) selon l'une quelconque des revendications 1 à 3, comprenant
- des moyens (22) pour guider l'eau à purifier,
- lesdits moyens (22) pour guider l'eau à purifier étant agencés de façon à limiter l'écoulement de l'eau à purifier dans ladite direction longitudinale (+z) à l'extérieur de l'espacement (25) formé par la paire d'électrodes (30, 20) constituée desdites électrode de cathode (20) et électrode d'anode (30), et facultativement, en outre, à l'extérieur d'un espacement formé par une autre paire d'électrodes (20b, 30b) constituée d'une autre électrode de cathode (20b) et d'une autre électrode d'anode (30b).

5. Dispositif (10) selon l'une quelconque des revendications 1 à 4, dans lequel
- ledit support d'électrode d'anode (40) est fermé ou comprend un bouchon (44) ou similaire au moyen duquel l'écoulement d'eau à l'intérieur du support d'électrode d'anode (40) est bloqué.

6. Dispositif (10) selon l'une quelconque des revendications 1 à 5, comprenant
- à l'extrémité supérieure du boîtier externe (11), un agencement de tuyau d'évacuation (80) pour évacuer l'eau purifiée et le matériau de floc séparément du dispositif (10), l'agencement de tuyau d'évacuation (80) comprenant
- une ouverture (83) pour évacuer le matériau de floc, ladite ouverture (83) étant à une première hauteur (h1), et
- un tuyau d'évacuation d'eau purifiée (84) relié par son extrémité audit boîtier externe (11) ou à un tuyau d'évacuation de matériau de floc à une deuxième hauteur (h2), la deuxième hauteur étant inférieure à la première hauteur (h2 < h1), et dans lequel
- le tuyau d'évacuation d'eau purifiée (84) continue jusqu'à un point (P4) qui est, dans la direction d'écoulement de l'eau purifiée, après l'extrémité dudit tuyau d'évacuation d'eau purifiée (84) et à une quatrième hauteur (h4) qui est supérieure à ladite deuxième hauteur (h4 > h2) et inférieure à ladite première hauteur (h4 < h1).

7. Dispositif (10) selon la revendication 6, dans lequel
- le tuyau d'évacuation d'eau purifiée (84) du système de tuyau d'évacuation (80) continue à partir du point où le tuyau d'évacuation d'eau purifiée (84) est relié par son extrémité audit boîtier externe (11) ou jusqu'à un tuyau d'évacuation de matériau de floc (82), dans la direction d'écoulement de l'eau purifiée jusqu'à un point qui est
• à une troisième hauteur (h3) et
• avant ledit point dans la direction d'écoulement de l'eau purifiée, qui est à ladite quatrième hauteur (h4) de telle manière que
- la troisième hauteur (h3) est inférieure à ladite deuxième hauteur (h2) (h3 < h2).

8. Utilisation du dispositif (10) selon l'une quelconque des revendications 1 à 7 de telle manière que
- un additif facilitant la formation de flocs est distribué dans l'eau à purifier ou l'eau purifiée.

9. Utilisation du dispositif (10) selon l'une quelconque des revendications 1 à 7 pour purifier des eaux usées produites dans un bâtiment résidentiel.
